# EUROPÄISCHE PATENTSCHRIFT

(11) **EP 0 945 173 B1**
(45) Veröffentlichungstag und Bekanntmachung des Hinweises auf die Patenterteilung: **29.10.2003**
(21) Anmeldenummer: 99105876.9
(22) Anmeldetag: 23.03.1999
(51) Int. Cl.: B01J 2/04, F25C 1/00

(54) **Vorrichtung und Verfahren zur Herstellung von pulverförmigen Stoffen**
Device and process for producing powdered material
Installation et procédé pour la préparation de matière en poudre

(30) Priorität: 25.03.1998 DE 19813101
(43) Veröffentlichungstag der Anmeldung: 29.09.1999
(73) Patentinhaber: Dressler, Herbert, 53229 Bonn (DE)
(72) Erfinder: Dressler, Herbert, 53229 Bonn (DE)
(74) Vertreter: Bauer, Wulf, Dr.

(56) Entgegenhaltungen:
- EP-A- 0 266 859
- DE-A- 4 132 693
- GB-A- 1 559 920
- US-A- 4 552 566

## Beschreibung

Die Erfindung bezieht sich auf eine Vorrichtung zum Versprühen chemisch-technischer Produkte zur Herstellung von pulverförmigen Stoffen mit möglichst kugelförmiger Struktur sowie auf ein Verfahren für ein derartiges Versprühen.

Für das Versprühen von Produkten sind sogenannte Sprühtürme bekannt. Sie bauen relativ groß. Eine möglichst kugelförmige Struktur der pulverförmigen Stoffe ist mit diesen bekannten Vorrichtungen und Verfahren in zufriedenstellender Art und Weise nicht zu erreichen. Vielmehr treten bei den vorbekannten Vorrichtungen und Verfahren Unregelmäßigkeiten in der Kornform und Verklebung auf, viele Teilchen haften aneinander, weil es in noch klebrigen Zustand zu Berührungen kommt und die Teilchen dann aneinander haften bleiben. Dies führt zu unregelmäßigen Strukturen. Die langen Abkühlstrecken, großen Gasmengen und die großen Innenräume der bekannten Sprühtürme sind nachteilig.

Hier setzt nun die Erfindung ein. Sie hat es sich zur Aufgage gemacht, eine Vorrichtung zum Versprühen der eingangs genannten Art sowie ein entsprechendes Verfahren anzugeben, das einen deutlich geringeren Innenraum benötigt als die vorbekannten Vorrichtungen und Verfahren sowie die gezielte Herstellung von feingutarmen Pulvern mit im wesentlichen runden Strukturen ermöglicht.

Vorrichtungsmäßig wird diese Aufgabe gelöst durch eine Vorrichtung mit den Merkmalen des Patentanspruchs 1.

Verfahrensmäßig wird diese Aufgabe gelöst durch ein Verfahren mit den Merkmalen des Patentanspruchs 4.

Nach der Erfindung wird das Versprühen solcher chemisch-technischer Produkte wie beispielsweise Kunststoffe, Wachse, pharmazeutische Produkte oder Lebensmittel möglich, die schmelzbar sind. Derartige Produkte haben Im geschmolzenen Zustand eine hohe Viskosität und hohe Cp-Werte. Erfindungsgemäß wird ein durch Verdüsen von im wesentlichen in flüssigem Aggregatzustand über eine Zuführeinrichtung eingedüstem Cryogas erzeugter Gasstrom zur Abkühlung der noch schmelzflüssigen kugelförmigen Tröpfchen bzw. Teilchen benutzt, so dass diese zunächst an ihrer Oberfläche soweit erstarren, dass die Oberfläche nicht mehr klebrig ist und anschließend auch im Volumen erstarren. Die Erfindung schlägt hierzu die drei genannten Zonen vor, nämlich die heiße Zone, in der sich die Tröpfchen bilden und eine im wesentlichen kugelförmige Form annehmen können. Die Fixierzone, die gegenüber der heißen Zone eine geringere Temperatur aufweist und in der die Tröpfchen durch Kontakt mit dem Cryogas so abgekühlt werden, dass ihre Oberfläche nicht mehr klebrig ist. Schließlich ist unterhalb der Fixierzone die noch kühlere Kühlzone vorgesehen, in der die Tröpfchen auch im inneren im wesentlichen erstarren.

Durch die Verwendung des Cryogases, also insbesondere CO₂ oder N₂, wird deutlich mehr Kälteleistung als im Stand der Technik zugeführt, so dass die Vorrichtung bei gleicher Produktionsleistung nicht nur deutlich kleiner bauen kann, sondern auch eine erheblich gezieltere und verbesserte Abkühlung, also ein erheblich wirkungsvollerer Entzug der Wärme der einzelnen Tröpfchen erreicht wird. Dadurch ist es möglich, dass in der Fixierzone die kugeligen Tröpfchen so rasch und ausreichend abkühlen, das sie oberflächlich nicht mehr kleben. Dies erfolgt zeitlich bevor durch Verwirbelungen oder durch andere Einflüsse die Möglichkeit besteht, dass sich zwei noch oberflächlich klebende Tröpfchen berühren können. Gerade aufgrund der relativ raschen Abkühlung, die durch das Cryogas erst erreicht wird, gelingt es, die Teilchen in ihrer kugeligen Form erstarren zu lassen, so dass sie bei einem Kontakt miteinander oder mit einem anderen Gegenstand, der spätestens in der Austragsvorrichtung stattfindet, sowohl nicht mehr klebrig sind als auch nicht mehr deformiert werden. Auf dem Wege durch die drei Zonen und solange sie noch mehr oder weniger gebremst durch den Innenraum nach unten fallen, werden die kugelförmigen Teilchen so weitgehend nicht nur an der Oberfläche, sondern auch im Volumen zum Erstarren gebracht, das sie gegen Ende ihrer Fallstrecke in Kontakt mit anderen Pulverteilchen und mit den Wänden des Behälters kommen können, ohne dabei deformiert zu werden, durch nachfallende Pulverkugeln in ihrer Form verändert zu werden oder gar zusammenbacken.

Die Ausbildung der Düseneinrichtung ist beliebig. Entscheidend ist nur, dass die Schmelze nach Durchtritt durch die Düseneinrichtung sich so vereinzelt, dass kleine Tröpfchen vorliegen, die möglichst gleiche Durchmesser haben. Diese Tröpfchen sind am Anfang noch unrund. Sie sind aber in der heißen Zone noch so ausreichend flüssig, dass sie sich zu möglichst idealen Kugeln formen.

Ist dies erreicht, treten sie bei Fortführung ihrer Fallbewegung in die Fixierzone ein. Ohne Kontakt miteinander werden sie dort relativ rasch, jedenfalls sehr wirksam mittels des Cryogases so abgekühlt, dass ihre Oberfläche nicht mehr klebrig ist. In der unter der Fixierzone befindlichen, noch kühleren Kühlzone wird dann auch das Volumen der Tröpfchen abgekühlt. Wenn die kugeligen Teilchen ihre Fallbewegung beendet haben, sind sie bereits so erstarrt, dass die in der Austragsvorrichtung usw. auf sie normalerweise einwirkenden Kräfte nicht zu einer Verformung und auf keinen Fall zu einem Verkleben benachbarter Kugeln führen. Erfindungsgemäß ermöglicht die Einspeisung von Cryogas also eine deutlich kleinere Bauform der Vorrichtung, eine gezieitere Produktion und ein gutes Produktionsergebnis, nämlich im wesentlichen kugelförmige Produkte. Der Anteil an Feinstgut ist auch im Vergleich zu den Sprühtürmen nach dem Stand der Technik relativ gering. Er läßt sich in einem nachgeschalteten Abscheider, beispielsweise einem Zyklon, einfach abtrennen. Auch dabei wirkt sich positiv die im wesentlichen kugelförmige Struktur des gewünschten Produktes aus.

Das Cryogas wird aus mehreren, am Umfang des im wesentlichen rotationssymmetrischen Behälters angeordneten Einzelzuführungen in den Innenraum des Behälters eingedüst. Dadurch wird eine im wesentlichen rotationssymmetrische Temperaturverteilung innerhalb des Behälters erzielt. Lokale Abweichungen werden vermieden. Die Verdüsung erfolgt vorzugsweise ohne tangentiale Komponente, obwohl eine solche nicht ausgeschlossen ist.

Die Düseneinrichtung befindet sich bevorzugt auf der Achse des Behälters und sprüht vertikal nach unten. Die Ausbildung der Düseneinrichtung selbst erfolgt nach dem Stand der Technik. Die Düseneinrichtung kann nur eine Einzeldüse sein, bevorzugt ist sie aber eine Vielzahl von Einzeldüsen, beispielsweise kommen auch ringförmige Düsenanordnungen in Betracht.

Weitere Vorteile und Merkmale der Erfindung ergeben sich aus den übrigen Ansprüchen sowie der nun folgenden Beschreibung eines nicht einschränkend zu verstehenden Ausführungsbeispiels der erfindungsgemäßen Vorrichtung, anhand welcher auch das erfindungsgemäße Verfahren im folgenden erläutert werden wird.

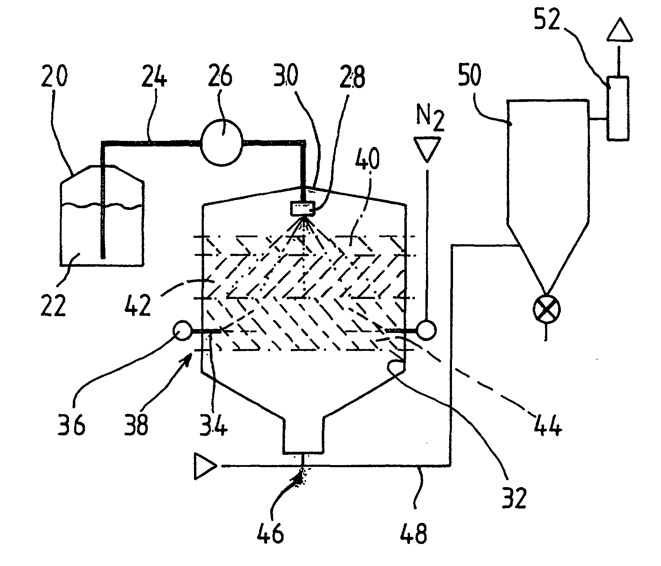

Die einzige Figur zeigt eine Prinzipskizze einer Vorrichtung zum Versprühen eines chemisch-technischen Produktes der erfindungsgemäßen Art.

Aus einem Schmelzebehälter 20, in dem sich ein schmelzflüssiges chemisch-technisches Produkt 22 befindet, wird über eine Förderleitung 24, in die eine Pumpe 26 eingeschaltet ist, das schmelzflüssige Produkt einer Düseneinrichtung 28 unter Druck zugeführt. Die Düseneinrichtung 28 befindet sich auf der Mittellinie eines im wesentlichen rotationssymmetrischen Behälters 30, der einen im wesentlichen zylindrischen Innenraum 32 begrenzt.

Im Seitenwandbereich des Behälters 30 sind mehrere Einzelzuführungen 34 für ein Cryogas vorgesehen. Sie sind in gleicher Höhe gleich verteilt über den Umfang angeordnet. Es ist durchaus möglich, sie nicht nur in einer Ebene (wie dargestellt) anzuordnen, sondern mehrere Ebenen vorzusehen. In der gezeigten Ausführung sind die Einzelzuführungen 34 über eine Ringleitung 36 miteinander verbunden, der über eine Zuleitung ein Cryogas in flüssigem Zustand, nämlich entweder N₂, wie dargestellt, oder aber CO₂, zugeführt wird.

Die Einzelzuführungen 34 bilden eine Zuführeinrichtung 38 für Cryogas. Aus dieser tritt das Cryogas in gasförmiger Form in den Innenraum 32 aus. Wie die Figur zeigt, ist der Austritt radial und leicht nach oben geneigt.

In der Figur ist der Betriebszustand der Vorrichtung dargestellt. Beim Betrieb bilden sich im Innenraum drei Zonen aus, auf die im folgenden eingegangen wird. Es soll gleich vorangeschickt werden, dass diese Zonen in der Figur lediglich durch waagerechte Trennebenen voneinander separiert dargestellt sind. in der Praxis sind die Verläufe wesentlich komplizierter. Zudem findet an den mit strichpunktierten Linien dargestellten Trennebenen auch kein nachweisbarer Temperatursprung statt, vielmehr nimmt die Temperatur von oben nach unten ständig ab, es bildet sich also ein Temperaturgradient aus.

zumeist verläßt die Schmelze die Düseneinrichtung 38 in Form dünner Fäden, die beim Herunterfallen zerreißen und sich zu kleinen Tröpfchen vereinzeln. Es sind aber auch andere Verfahrensweisen möglich. Entscheidend ist lediglich, dass zumindest in einer gewissen Entfernung unterhalb der Düseneinrichtung 28 schmelzflüssige Tröpfchen des Produkts vorliegen.

In einer heißen Zone 40 haben diese schmelzflüssigen Tröpfchen zunächst die Möglichkeit, eine Kugelgestalt anzunehmen. Gemäß der Figur reicht die heiße Zone 40 nicht bis zur Düseneinrichtung 28, dies ist aber nicht einschränkend zu verstehen, je nach Ausbildung der Verdüsung reicht die obere Grenze der heißen Zone 40 auch bis zur Düseneinrichtung 28.

Aus der heißen Zone 40 fallen die kugligen Strukturen nun in eine Fixierzone 42. Hier werden sie durch das Cryogas so wirksam abgekühlt, das in kurzer Zeit, jedenfalls während ihrer Fallzeit durch die Fixierzone 42, die Oberfläche der Teilchen bzw. Strukturen so stark abgekühlt wird und das Material so ausreichend erstarrt, dass die Teilchen nicht mehr klebrig sind.

Sie durchfallen sodann die noch kühlerere Kühlzone 44, in der sie auch im inneren weitgehend erstarren. Das Erstarren wird jedenfalls so weit getrieben, dass die Kügelchen nicht mehr durch Kontakt miteinander, durch ihr Eigengewicht oder durch das Gewicht später auf sie treffender anderer Kugeln deformiert werden können.

Die erhaltenen kugelförmigen Teilchen werden mittels einer pneumatischen AustragsVorrichtung 46 in einer Leitung 48 gefördert, sie werden zu einem hier als Zyklon ausgebildeten Abscheider 50 geleitet. Mittels eines Förderventilators 52 wird der pulverförmige Stoff entnommen und abgeführt, er kann in einen Speicherbehälter geleitet oder gleich der Produktion zugeleitet werden. Dieses Material hat eine hohe Rieselfähigkeit und einen kleinen Feinstanteil.

Erfindungsgemäß wird wenig, praktisch kein Fördergas benutzt. Das Cryogas kann für die Förderung herangezogen werden. Staubexplosionen werden wirksam verhindert. Aufgrund der kleinen Räume findet auch eine Oxidation nicht im merklichen Umfang statt. Erfindungsgemäß wird nur eine geringe Gasmenge benötigt, da auch das Volumen des Innenraums 32 relativ klein ist.

Erfindungsgemäß sind, im Innenraum, insbesondere im Wandbereich, Temperaturfühler an unterschiedlichen Orten angebracht. Durch sie kann die Zufuhr des Cryogases durch die Zuführeinrichtung 38 so gesteuert werden, dass die gewünschte Temperaturverteilung, die durch die Zonen 40 bis 44 nur angedeutet ist, konstant aufrechterhalten bleibt.

## Patentansprüche

1. Vorrichtung zum Versprühen chemisch-technischer Produkte (22) zur Herstellung von pulverförmigen Stoffen mit möglichst kugelförmiger Struktur, mit
a) einem Behälter (30), der einen Innenraum (32) begrenzt,
b) einer Düseneinrichtung (28), die im oberen Bereich des Innenraums (32) angeordnet ist und die mit einer zuführenden Förderleitung (24) für eine heiße Schmelze des Produkts (22) verbunden ist,wobei die Schmelze die Düseneinrichtung (28) typischerweise in Form feiner Fäden verläßt, die gravitationsbedingt nach unten fallen und sich beim Entfernen von der Düseneinrichtung (28) zu kleinen Tröpfchen vereinzeln,
c) einer Zuführeinrichtung (38) für ein Cryogas, vorzugsweise CO₂ oder N₂, die
c1) aus mehreren, umfangmäßig verteilt angeordnet Einzelzuführungen (24) gebildet ist, der das Cryogas in überwiegend flüssigem Zustand zugeleitet wird und aus der ein Cryogasstrom radial und leicht in Richtung der Düseneinrichtung (28) geneigt in den Innenraum (32) austritt, welcher in Kontakt mit den kleinen Tröpfchen kommt, und
c2) unterhalb der Düseneinrichtung (28) derart angeordnet und ausgebildet ist, dass sich im Innenraum (32) ein Temperaturgefälle mit im Wesentlichen drei Zonen (40, 42, 44) ausbildet, nämlich von oben nach unten gesehen
- eine heiße Zone (40), in der sich die Tröpfchen bilden und eine im wesentlichen kugelförmige Form annehmen,
- eine demgegenüber kühlere Fixierzone (42), in der die Tröpfchen durch Kontakt mit dem Cryogas so abgekühlt werden, dass ihre Oberfläche nicht mehr klebrig ist, so dass zwei sich berührende Tröpfchen nicht aneinander kleben und
- eine demgegenüber wieder kühlere Kühlzone (44), in der die Tröpfchen auch im Inneren im wesentlichen den festen Aggregatzustand annehmen und
d) im Innenraum des Behälters (30) angeordneten Temperaturfühlern zur Steuerung der Zuführeinrichtung (38) derart, dass die gewünschte Temperaturverteilung im Behälter (30) konstant aufrechterhalten bleibt,
e) einer pneumatischen Austragsvorrichtung (46) im unteren Bereich des Innenraums (32) für ein Austragen des pulverförmigen Stoffes.

2. Vorrichtung nach Anspruch 1, **dadurch gekennzeichnet, dass** die Zuführeinrichtung (38) Sprühdüsen für ein Verdüsen zu Gas von im wesentlichen flüssigem Cryogas aufweist.

3. Vorrichtung nach Anspruch 1, **dadurch gekennzeichnet, dass** der Austragsvorrichtung (46) ein Feinstgutabscheider (50) nachgeschaltet ist, in dem das Pulver von Feinststoffen getrennt wird, insbesondere dass ein Zyklon nachgeschaltet ist.

4. Verfahren zum Versprühen chemisch-technischer Produkte (22) zur Herstellung von pulverförmigen Stoffen mit möglichst kugelförmiger Struktur, bei dem ein Behälter (30), der einen Innenraum (32) begrenzt, aufweist
a) eine Düseneinrichtung (28), die im oberen Bereich des Innenraums (32) angeordnet ist,
b) eine Zuführeinrichtung (38) für ein Cryogas, vorzugsweise CO₂ oder N₂, die aus mehreren, umfangmäßig verteilt angeordnet en Einzelzuführungen (24) gebildet und unterhalb der Düseneinrichtung (28) angeordnet ist,
c) im Innenraum des Behälters (30) angeordnete Temperaturfühler,
d) eine pneumatische Austragsvorrichtung (46), die sich im unteren Bereich des Innenraums (32) befindet,
wobei
1) aus der Düseneinrichtung (28) eine heiße Schmelze des Produkts (22) zugeführt wird, wobei das schmelzflüssige Material so austritt, das sich kleine Tröpfchen bilden, die gravitationsbedingt nach unten fallen,
2) aus der Zuführeinrichtung (38), der das Cryogas in überwiegend flüssigem Zustand zugeleitet wird, ein Cryogasstrom seitlich aus mehreren, umfangmäßig verteilt angeordneten Einzelzuführungen (34) radial und leicht in Richtung der Düseneinrichtung (28) geneigt in den Innenraum eingedüst wird und in Kontakt mit den kleinen Tröpfchen kommt, dass sich im Innenraum (32) ein Temperaturgefälle mit im Wesentlichen drei Zonen (40, 42, 44) ausbildet, nämlich von oben nach unten gesehen
a) eine heiße Zone (40), in der sich die Tröpfchen bilden und eine im wesentlichen kugelförmige Form annehmen,
b) eine demgegenüber kühlere Fixierzone (42), in der die Tröpfchen durch Kontakt mit dem Cryogas so abgekühlt werden, dass ihre Oberfläche nicht mehr klebrig ist, so dass zwei sich berührende Tröpfchen nicht aneinander kleben und
c) eine demgegenüber wieder kühlere Kühlzone (44), in der die Tröpfchen auch im Inneren im wesentlichen den festen Aggregatzustand annehmen,
3) über die im Innenraum des Behälters (30) angeordneten Temperaturfühler die Zuführeinrichtung (38) derart gesteuert wird, dass die gewünschte Temperaturverteilung im Behälter (30) konstant aufrechterhalten bleibt, und
4) abschließend der pulverförmige Stoff mittels einer pneumatischen Austragsvorrichtung (46), die sich im unteren Bereich des Innenraums (32) befindet, ausgetragen wird.

5. Verfahren nach Anspruch 4, **dadurch gekennzeichnet, dass** das Produkt (22) ein Kunststoff, ein Wachs, ein pharmazeutisches Produkt oder ein Lebensmittel ist.

6. Verfahren nach Anspruch 4, **dadurch gekennzeichnet, dass** das Cryogas die Zuführeinrichtung (38) in im wesentlichen gasförmigem Zustand verläßt.

7. Verfahren nach Anspruch 1, **dadurch gekennzeichnet, dass** der pulverförmige Stoff Kugeln aufweist, deren mittlerer Durchmesser im Bereich zwischen 0,005 und 1 mm liegt.

8. Verfahren nach Anspruch 4, **dadurch gekennzeichnet, dass** das schmelzflüssige Material die Düseneinrichtung (28) vertikal nach unten gerichtet verläßt, wobei der Austrittsbereich im wesentlichen kegelförmig ist.

9. Verfahren nach Anspruch 4, **dadurch gekennzeichnet, dass** der Innenraum (32) im wesentlichen drehsymmetrisch ist und dass die Düseneinrichtung (28) axial nach unten gerichtet angeordnet ist.

## Claims

1. Device for spraying technical chemicals (22) for manufacturing substances in powder form with as spherical a structure as possible, said device having
a) a vessel (30) defining an inner volume (32),
b) a nozzle array (28) disposed in the upper portion of the inner volume (32) and communicating with a feed duct (24) for delivering a hot molten mass of the product (22), the molten mass typically leaving the nozzle array (28) in the form of fine strands that fall downward by gravity and form single small droplets as they move away from the nozzle array (28),
c) a supplying apparatus (38) for supplying a cryogenic gas, preferably for supplying CO₂ or N₂, said apparatus being
c1) formed from a plurality of individual circumferentially spaced supply means (24) and being fed the cryogenic gas in a mainly fluid state, a flow of cryogenic gas exiting said supplying apparatus in a radial direction so as to be slightly inclined toward said supplying apparatus (28) and entering the inner volume (32) where it comes into contact with the small droplets, and
c2) disposed beneath the nozzle array (28) in such a manner and being of such design that a temperature gradient with substantially three zones (40, 42, 44) forms within the inner volume (32), said three zones being, as viewed from the top to the bottom
- a hot zone (40) in which the droplets form and substantially take on a spherical shape,
- a comparatively cooler fixation zone (42) in which the droplets are cooled in contact with the cryogenic gas to such an extent that their surface is no longer sticky so that two adjacent droplets will not stick together and
- an even cooler cooling zone (44) in which the droplets substantially take on the solid aggregate condition in their interior as well and
d) temperature sensors disposed in the inner volume of the vessel (30) for controlling the supplying apparatus (38) in such a manner that the desired temperature distribution within the vessel (30) is kept constant,
e) a pneumatic discharge device (46) provided in the bottom portion of the inner volume (32) for discharging the substance in powder form.

2. The device of claim 1, **characterized in that** the supplying device (38) has spray nozzles for nozzling substantially fluid cryogenic gas to expel a gas.

3. The device of claim 1, **characterized in that** a fines separator (50) for separating the fine particles from the powder is connected downstream of the discharge device (46), more specifically that a cyclone separator is connected downstream thereof.

4. A method for spraying technical chemicals (22) for manufacturing substances in powder form with as spherical a structure as possible, a vessel (30) defining an inner volume (32) being comprised of
a) a nozzle array (28) disposed in the upper portion of the inner volume (32),
b) a supplying apparatus (38) for supplying a cryogenic gas, preferably for supplying CO₂ or N₂, said apparatus being formed from a plurality of individual circumferentially spaced supply means (24) and disposed beneath the nozzle array (28),
c) temperature sensors disposed in the inner volume of the vessel (30),
d) a pneumatic discharge device (46) provided in the bottom portion of the inner volume (32),
wherein
1) the hot molten mass of the product (22) is delivered by the nozzle array (28), the molten fluid material exiting said array in such a manner that small droplets form, which fall downward by gravity,
2) a flow of cryogenic gas is nozzled from the nozzle array (38) which is fed the cryogenic gas in a mainly fluid state into the inner volume, said cryogenic gas being delivered laterally by a plurality of individual circumferentially spaced supply means (24) in a radial direction so as to be slightly inclined toward said supplying apparatus (28) and coming into contact with the small droplets, a temperature gradient with substantially three zones (40, 42, 44) forming within the inner volume (32), said three zones being, as viewed from the top to the bottom
a) a hot zone (40) in which the droplets form and substantially take on a spherical shape,
b) a comparatively cooler fixation zone (42) in which the droplets are cooled in contact with the cryogenic gas to such an extent that their surface is no longer sticky so that two adjacent droplets will not stick together and
c) an even cooler cooling zone (44) in which the droplets substantially take on the solid aggregate condition in their interior as well,
3) the supplying device (38) being controlled by the temperature sensors disposed in the inner volume of the vessel (30) in such a manner that the desired temperature distribution within the vessel (30) is kept constant and
4) the substance in powder form is eventually discharged by means of a pneumatic discharge device (46) located in the bottom portion of the inner volume (32).

5. The method according to claim 4, **characterized in that** the product (22) is a plastic material, wax, a pharmaceutical product or food.

6. The method according to claim 4, **characterized in that** the cryogenic gas exits the supplying device (38) in a substantially gaseous condition.

7. The method according to claim 1, **characterized in that** the substance in powder form is comprised of balls the mean diameter of which ranges from 0.005 to 1 mm.

8. The method according to claim 4, **characterized in that** the molten fluid material exits the nozzle array (28) vertically downward, the exit area being substantially conical.

9. The method according to claim 4, **characterized in that** the inner volume (32) is substantially rotationally symmetrical and that the nozzle array (28) is disposed pointing axially downward.

## Revendications

1. Dispositif pour pulvériser des produits technochimiques (22) dans le but de produire des substances pulvérulentes ayant une structure aussi sphérique que possible avec
a) un récipient (30) définissant un volume interne (32),
b) un système de buses (28) disposé dans la partie supérieure du volume interne (32) et relié à un tube de transport (24) acheminant le produit (22) en fusion, ledit produit en fusion sortant typiquement du système de buses (28) sous forme de fils fins qui tombent sous l'effet de la gravité et se réduisent en fines gouttelettes à mesure qu'ils s'éloignent du système de buses (28),
c) un système d'alimentation (38) pour l'acheminement d'un gaz cryogénique, de préférence du CO₂ ou du N₂, qui
c1) est constitué de plusieurs organes individuels d'alimentation (24) répartis sur son pourtour, le gaz cryogénique étant acheminé vers ledit système d'alimentation à l'état sensiblement liquide et un flux de gaz cryogénique sortant dudit système dans la direction radiale légèrement en biais par rapport au système de buses (28) et pénétrant dans le volume interne (32) où il entre en contact avec les fines gouttelettes et
c2) est disposé en dessous du système de buses (28) et conformé de manière à créer dans le volume interne (32) un gradient thermique sensiblement constitué de trois zones (40, 42, 44), notamment, du haut vers le bas
- d'une zone chaude (40) dans laquelle les gouttelettes se forment et prennent une forme sensiblement sphérique,
- d'une zone de fixation (42) moins chaude dans laquelle les gouttelettes sont refroidies au contact du gaz cryogénique à tel point que leur surface ne colle plus de sorte que deux gouttelettes qui se touchent ne restent plus collées l'une à l'autre et
- d'une zone de refroidissement (44) encore moins chaude dans laquelle les gouttelettes adoptent sensiblement l'état d'agrégation solide en leur sein également et
d) des capteurs de température disposés dans le volume interne du récipient (30) et destinés à commander le système d'alimentation (38) de telle sorte que la distribution de température choisie est maintenue constante au sein du récipient (30),
e) un dispositif d'évacuation (46) pneumatique prévu dans la partie inférieure du volume interne (32) et destiné à évacuer la substance pulvérulente.

2. Dispositif selon la revendication 1, **caractérisé en ce que** le système d'alimentation (38) comporte des gicleurs de pulvérisation destinés à vaporiser un gaz cryogénique sensiblement liquide en un gaz.

3. Dispositif selon la revendication 1, **caractérisé en ce qu'**en aval du dispositif d'évacuation (46) est monté un séparateur de fines (50) dans lequel les fines particules sont séparées de la poudre, notamment **en ce qu'**en aval dudit dispositif est monté un séparateur cyclonique.

4. Procédé pour pulvériser des produits technochimiques (22) dans le but de produire des substances pulvérulentes ayant une structure aussi sphérique que possible avec un récipient (30) définissant un volume interne (32) et comportant
a) un système de buses (28) disposé dans la partie supérieure du volume interne (32),
b) un système d'alimentation (38) pour l'acheminement d'un gaz cryogénique, de préférence du CO₂ ou du N₂, qui est constitué de plusieurs organes individuels d'alimentation (24) répartis sur son pourtour et est disposé en dessous du système de buses (28),
c) des capteurs de température disposés dans le volume interne du récipient (30),
d) un dispositif d'évacuation (46) pneumatique prévu dans la partie inférieure du volume interne (32),
où
1) le produit (22) en fusion est fourni par le système de buses (28), le matériau en fusion sortant dudit système de manière à former de fines gouttelettes qui tombent sous l'effet de la gravité,
2) un flux de gaz cryogénique est fourni par le système d'alimentation (38) qui est alimenté en gaz cryogénique à l'état en majorité liquide, ledit flux de gaz cryogénique étant injecté latéralement dans le volume interne par plusieurs organes d'alimentation individuels (34) répartis sur le pourtour dans une direction radiale légèrement oblique par rapport au système de buses (28) et entrant en contact avec les fines gouttelettes, un gradient thermique sensiblement constitué de trois zones (40, 42, 44) étant ainsi créé dans le volume interne (32), ces trois zones étant notamment, du haut vers le bas
a) une zone chaude (40) dans laquelle les gouttelettes se forment et prennent une forme sensiblement sphérique,
b) une zone de fixation (42) moins chaude dans laquelle les gouttelettes sont refroidies au contact du gaz cryogénique à tel point que leur surface ne colle plus de sorte que deux gouttelettes qui se touchent ne restent plus collées l'une à l'autre et
c) une zone de refroidissement (44) encore moins chaude dans laquelle les gouttelettes adoptent sensiblement l'état d'agrégation solide en leur sein également,
3) le système d'alimentation (38) étant commandé par les capteurs de température disposés dans le volume interne du récipient (30) de telle sorte que la distribution de température choisie est maintenue constante au sein du récipient (30), et
4) la substance pulvérulente est finalement évacuée au moyen d'un dispositif d'évacuation (46) pneumatique prévu dans la partie inférieure du volume interne (32).

5. Procédé selon la revendication 4, **caractérisé en ce que** le produit (22) est une matière plastique, une cire, un produit pharmaceutique ou un aliment.

6. Procédé selon la revendication 4, **caractérisé en ce que** le gaz cryogénique sort du système d'alimentation (38) à l'état sensiblement gazeux.

7. Procédé selon la revendication 1, **caractérisé en ce que** la substance pulvérulente comporte des boules dont le diamètre moyen est compris entre 0,005 et 1 mm.

8. Procédé selon la revendication 4, **caractérisé en ce que** la matière en fusion sort du système de buses (28) verticalement vers le bas, la sortie étant sensiblement conique.

9. Procédé selon la revendication 4, **caractérisé en ce que** le volume interne (32) est sensiblement rotationnellement symétrique et que le système de buses (28) est disposé de manière à être orienté axialement vers le bas.
